# FASCICULE DE BREVET EUROPEEN

(11) **EP 1 063 504 B1**
(45) Date de publication et mention de la délivrance du brevet: **01.04.2009**
(21) Numéro de dépôt: 00440186.5
(22) Date de dépôt: 20.06.2000
(51) Int. Cl.: G01L 9/00, G01D 11/24

(54) **Procédé de fabrication d'un dispositif de mesure**
Verfahren zur Herstellung einer Messvorrichtung
Method for manufacturing a measuring device

(30) Priorité: 24.06.1999 FR 9908203
(43) Date de publication de la demande: 27.12.2000
(73) Titulaire: Kirchdoerffer, Rémy, 1134 Vufflens le Château (CH)
(72) Inventeur: Kirchdoerffer, Rémy, 1134 Vufflens le Château (CH)
(74) Mandataire: Nuss, Pierre

(56) Documents cités:
- EP-A- 0 282 967
- DE-A- 4 203 832
- US-A- 5 548 996

## Description

La présente invention concerne la fabrication de dispositifs électroniques, notamment dans le domaine de la mesure et de la détection, et a pour objet un procédé de fabrication d'un dispositif du type précité, ainsi que des dispositifs ainsi obtenus.

On connaît actuellement déjà la technique du résinage pour enrober des composants électroniques et assurer ainsi leur protection.

Toutefois, cette technique est relativement lente et ne permet pas une production efficiente, en grande quantité, de produits de moyenne ou grande dimension. Elle est, en outre, limitée en termes de diversité des formes extérieures résultantes et aboutit, du fait de la nature du matériau utilisé, à des produits dont les propriétés mécaniques (rigidité notamment) et la résistance aux chocs et aux agressions chimiques sont pénalisantes, voire rendent leur utilisation impossible, dans certaines applications, en particulier dans l'industrie.

Par ailleurs, on connaît également la technique du surmoulage de pièces ou d'articles, en les recouvrant d'une couche de matière thermoplastique en vue de leur conférer leur forme terminale et d'isoler et de protéger physiquement les pièces ou les articles surmoulés par rapport à l'extérieur.

Néanmoins, cette technique fait subir aux éléments à surmouler un choc thermique (matériau en fusion) et un choc mécanique (matériau appliqué sous pression), qui ne permet pas la mise en oeuvre de cette technique pour des composants électroniques sensibles ou délicats, sans risque d'endommagement ou de rupture de leurs liaisons et connexions, le cas échéant.

Par le document EP-A-0 282 967, on connaît déjà un détecteur dont le corps est formé en deux opérations successives de moulage au moyen de deux résines différentes, tel que décrit dans le préambule de la revendication 1.

Le document DE-A-42 03832 divulgue quant à lui un procédé de fabrication d'un capteur de pression semi-conducteur. Le composant fonctionnel du capteur est monté sur un socle, puis encapsulé par un boîtier extérieur, à l'exception de sa membrane et de sa face arrière.

Aucun de ces deux documents ne prévoit toutefois un positionnement précis des différents composants actifs, ni a fortiori la conservation de ce positionnement entre les phases de prémontage et de résinage, ainsi que durant cette dernière phase.

La présente invention a notamment pour but de pallier les inconvénients précités, en particulier, mais non limitativement, en relation avec des appareils ou instruments de mesure et/ou de détection à usage industriel intégrant des composants sensibles et nécessitant une protection efficace.

A cet effet, elle a pour objet un procédé de fabrication présentant les caractéristiques exposées dans la revendication 1.

Les revendications 2 à 7 portent sur des caractéristiques additionnelles ou des variantes de réalisation possibles du procédé selon l'invention.

Cette dernière comprend également un appareil ou instrument de mesure tel que ressortant de la revendication 8, ainsi qu'un capteur ou détecteur selon la revendication 9.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en perspective latérale à l'état éclaté d'un dispositif du type capteur avant le prémontage de ses composants fonctionnels sur un corps support ;
la figure 2 est une vue similaire à celle de la figure 1 du même dispositif après prémontage ;
la figure 3 est une vue de dessus et en perspective du dispositif des figures 1 et 2 à l'état fini après résinage et surmoulage ;
la figure 4 est une vue en perspective d'une bride mise en oeuvre pour le prémontage des éléments constitutifs du dispositif des figures 1 à 3 ;
la figure 5 est une vue en élévation latérale et en coupe d'un détecteur fabriqué selon le procédé objet de l'invention, et,
la figure 6 est une vue en élévation latérale et en coupe d'un capteur inductif correspondant à une variante de réalisation du capteur représenté sur les figures 1 à 3.

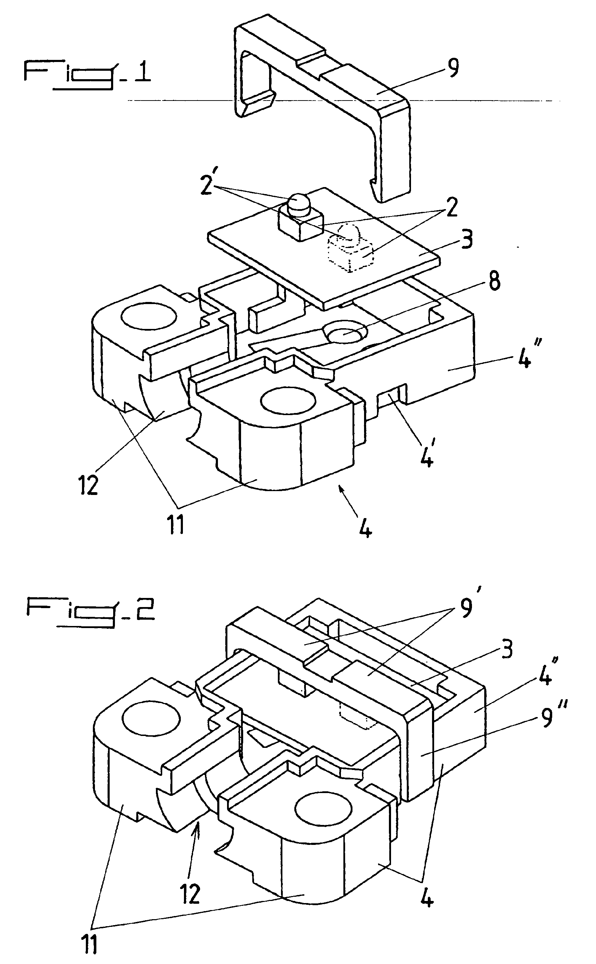

Conformément à cette dernière, et comme le montrent les figures 1 à 3 des dessins annexés, le procédé de fabrication consiste essentiellement à prémonter les différents composants actifs 2, 2' du dispositif 1, 1', dont certains sont éventuellement regroupés en sous-ensembles fonctionnels 3, sur et/ou dans un corps support 4, puis à résiner l'ensemble prémonté résultant, ainsi qu'éventuellement ses zones de connexion avec un câble 5 de liaison et/ou d'alimentation, pour former une pièce sensiblement monobloc et, enfin, à surmouler sous pression ladite pièce résinée, ainsi qu'éventuellement la portion proximale du câble 5, avec un matériau 7 thermoplastique compatible avec la résine 6 utilisée, pour obtenir un appareil ou instrument 1, 1' présentant la forme souhaitée et en tant que produit fini venu de moulage.

Un tel procédé de fabrication en trois phases successives distinctes autorise une production standardisée en grande quantité, une grande souplesse dans les formes finales pour un même type de dispositifs 1, 1' et une automatisation aisée avec un taux de rejet faible.

En particulier, l'enrobage en deux phases consécutives et avec deux matériaux différents permet de garantir une parfaite étanchéité finale du dispositif 1, 1', une protection mécanique augmentée des composants actifs 2, 2', de nature électrique ou électronique, et de leurs liaisons internes, notamment par rapport aux chocs, et une standardisation de la production malgré une grande diversité de formes et de matériaux possible (une pièce résinée monobloc peut être surmoulée avec des formes et des matériaux variés), tout en réduisant de manière importante le temps de fabrication par rapport à des dispositifs 1, 1' entièrement résinés ou obtenus par assemblage de différents éléments.

Le corps support 4 est réalisé en un matériau lui permettant d'assurer différentes fonctions mécaniques lors du prémontage, du résinage et du surmoulage (positionnement et maintien des éléments actifs 2, 2' et des éventuels sous-ensembles 3, positionnement précis lors du résinage et du surmoulage) et de constituer le squelette du dispositif 1, 1' fini, en lui conférant sa cohésion structurelle et sa résistance mécanique. Cette pièce 4 pourra être réalisée sous forme de pièce en matière plastique injectée ou sous forme de pièce métallique, le cas échéant, préassemblée ou conformée par matriçage.

Pour éviter, par exemple dans le cas d'un capteur 1 ou d'un détecteur 1', une modification des caractéristiques de détection ou de mesure après résinage, il peut être prévu que la pièce résinée soit disposée dans le moule de surmoulage par injection de telle manière qu'au moins une face ou une portion de face 8 formant, le cas échéant, face de détection, n'est pas recouverte par le matériau 7 de surmoulage, ladite face ou portion de face 8 étant éventuellement délimitée latéralement par des cannelures ou des renfoncements similaires constituant avec le matériau 7 de surmoulage des chicanes d'étanchéité.

Ainsi, après l'opération de résinage, l'ensemble des caractéristiques fonctionnelles du capteur 1 ou du détecteur 1' sont paramétrées et opérationnelles, et peuvent par conséquent être entièrement testées avant surmoulage.

Le résinage permet notamment de protéger les composants actifs 2, 2', notamment électroniques, et les liaisons brasées et de garantir une bonne tenue mécanique de la pièce à surmouler pendant l'opération de surmoulage.

En outre, en résinant l'ensemble prémonté (composants actifs 2, 2' / sous-ensembles 3 / corps support 4), il est possible de surmouler ce dernier sous haute pression et avec un matériau 7 dur (matériau thermoplastique à dureté Shore élevée) nécessitant une température élevée pour sa mise en oeuvre, puisqu'il n'y a pas de contact direct entre les composants 2, 2' sensibles à la chaleur et/ou fragiles et le matériau 7 de surmoulage.

Afin de faciliter la manipulation du dispositif 1, 1' et de garantir une conservation du positionnement initial des composants 2, 2' et des sous-ensembles 3 après le prémontage et durant la phase de résinage, il est prévu de mettre en place au moins une pièce de rétention 9 pour maintenir les composants actifs 2, 2', et/ou sous-ensembles 3 de tels composants, sur et/ou dans le corps support 4 après la phase de prémontage et avant résinage.

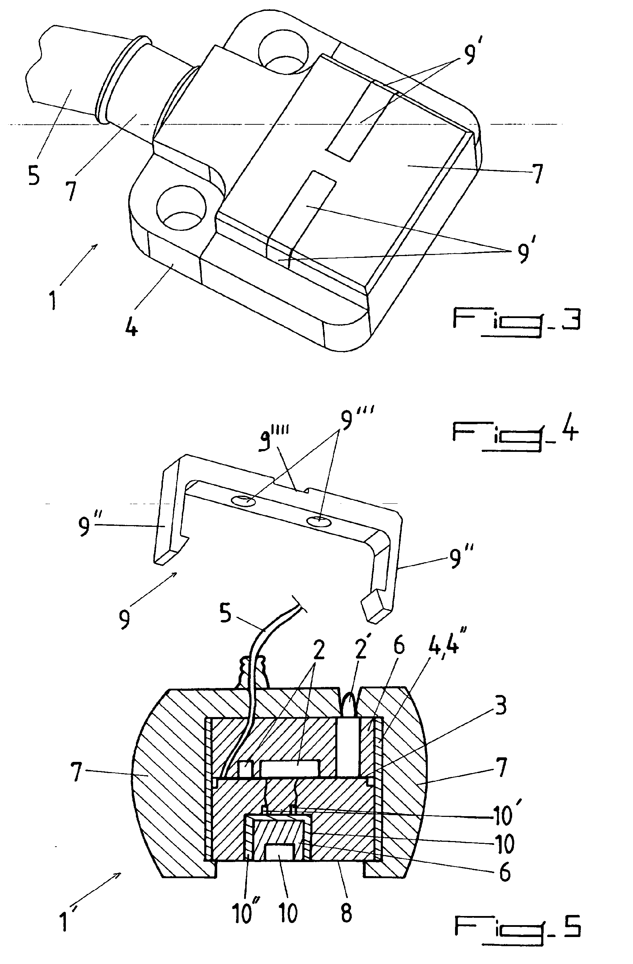

Comme le montrent les figures 2 et 4 des dessins annexés, la pièce de rétention peut avantageusement présenter une forme générale en U, par exemple avec deux ailes 9" élastiquement déformable se terminant par des crochets, et est solidarisée avec le corps support 4 par l'intermédiaire d'un engagement par encliquetage au niveau de portions de venue en prise 4' formées sur ledit corps support 4.

Lorsque le dispositif 1, 1' présente des voyants 2' de signalisation de son état ou de fonctions réalisées, la pièce de rétention 9 peut recouvrir au moins un tel voyant lumineux 2' et constituer un guide de lumière pour ce ou ces derniers, au moins une partie 9' des faces externes de ladite pièce 9 n'étant pas recouverte par le matériau 7 de surmoulage.

Ladite pièce 9 comportera alors avantageusement un ou des orifices 9"' de réception desdits voyants 2' et sera réalisée en un matériau transparent ou translucide. La forme en U de ladite pièce 9 permettra de vérifier visuellement l'état du dispositif 1, 1' sur plusieurs faces de ce dernier.

Les parties non recouvertes de la pièce de rétention 9 en forme d'étrier seront avantageusement situées au moins sur la ou les face(s) visible(s) du dispositif 1, 1' après son installation en position de montage fonctionnel.

Toutefois, même sur ces faces, ladite pièce 9 pourra comporter (notamment au niveau de l'âme du U) une gorge 9"" ou un renfoncement d'un autre type (en surface ou dans son épaisseur, avec traversement latéral ou perpendiculaire), assurant un passage entre les deux faces opposées de ladite pièce et pouvant être rempli de matériau de surmoulage, de manière à assurer une très bonne intégration et cohésion de ladite pièce 9 avec ledit matériau de surmoulage formant la partie essentielle du corps dudit dispositif 1, 1'.

En variante à ce qui précède, il peut aussi être prévu, conformément à l'invention, en cas de mise en oeuvre d'une pièce de rétention 9, de supprimer la phase de résinage, notamment lorsque le montage des composants 2, 2' sur le ou les sous-ensemble(s) 3 est relativement rigide et le montage de ce dernier dans le corps support 4 en coopération avec la pièce 9 relativement stable et résistant.

Ainsi, on passera directement de la phase de prémontage et installation dans le boîtier support ouvert 4 (avec mise en oeuvre d'au moins une pièce 9) à la phase de surmoulage sous pression, les sous-ensembles 3 pouvant le cas échéant être eux-mêmes des structures prérésinées ou encapsulées dans des boîtiers de protection, ce en fonction de la nature et de la sensibilité des composants 2, 2'.

Conformément à un mode de réalisation préférentiel de l'invention, représenté aux figures 1 à 3 et 5 des dessins annexés, le corps support 4 constitue l'ossature structurante du dispositif 1, 1', définit au moins certaines des conformations externes du dispositif 1, 1' fini et présente un contenant 4" en forme de boîtier ouvert pouvant recevoir au moins un sous ensemble fonctionnel 3 sous forme de carte à circuits imprimés, ainsi que l'extrémité du câble 5, la bride de maintien 9 fermant au moins partiellement l'ouverture d'introduction dudit boîtier 4" après encliquetage et le résinage n'affectant sensiblement que l'intérieur dudit boîtier 4", en recouvrant et en figeant dans la résine 6 l'ensemble des composants et sous-ensembles disposés dans ledit boîtier 4" et en remplissant sensiblement le volume intérieur de ce dernier.

Comme le montrent les figures 1 à 3 des dessins annexés, le corps support 4 pourra par exemple comporter, en tant que parties non recouvertes lors du résinage et du surmoulage, des projections latérales 11 formées d'un seul tenant avec ledit corps support 4 et pouvant servir à la fixation du dispositif 1,1' (par des vis ou autres) lors de l'installation de ce dernier.

En outre, ledit corps support pourra également intégrer, le cas échéant, une portion en forme de manchon ou de rainure 12 débouchant dans le contenant 4" en forme de boîtier et destinée à recevoir et à assurer le maintien de l'extrémité du câble 5 de liaison et/ou d'alimentation.

Cette portion 12 sera avantageusement remplie lors du surmoulage de manière à figer la position de l'extrémité du câble 5 et, le cas échéant, prolongée par une portion tubulaire supplémentaire destinée à rigidifier la portion correspondante recouverte du câble 5 et renforcer la liaison mécanique de ce dernier avec le dispositif 1, 1'.

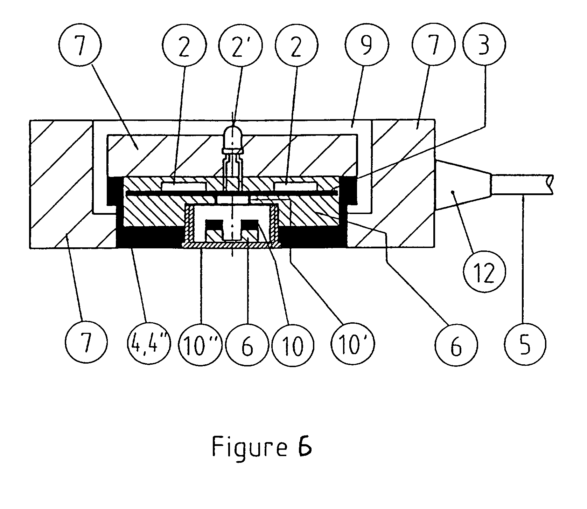

Selon une caractéristique supplémentaire de l'invention, représenté notamment aux figures 5 et 6 des dessins annexés, le procédé peut en outre consister, dans le cas d'un capteur ou détecteur inductif, à réaliser, préalablement au prémontage des composants actifs 2, 2' sur et/ou dans le corps support 4, le composant détecteur 2 comprenant la bobine de détection 10 sous forme de module ou de sous-ensemble résiné par implantation de ladite bobine 10 et de bornes 10' de connexion externe sur ou dans une pièce support 10", et résinage consécutif de l'ensemble monté ainsi formé.

L'invention a également pour objets, tel que cela ressort des figures 1 à 3, 5 et 6 des dessins annexés, d'une part, un appareil ou un instrument de mesure et, d'autre part, un capteur 1 ou détecteur 1', caractérisés en ce qu'ils sont principalement constitués d'un noyau résiné monobloc renfermant notamment les différents composants actifs 2, 2' montés sur/dans un corps support 4 et d'une enveloppe ou coque externe 7 surmoulée et en ce qu'il sont obtenus au moyen du procédé selon l'invention tel que décrit ci-dessus.

## Revendications

1. Procédé de fabrication d'un dispositif du type instrument ou appareil de mesure ou de détection, notamment d'un capteur ou d'un détecteur, consistant à prémonter les différents composants actifs (2, 2') du dispositif (1, 1') sur et/ou dans un corps support (4), puis à résiner au moins partiellement l'ensemble prémonté résultant, ainsi que ses zones de connexion avec un câble (5) de liaison et/ou d'alimentation, pour former une pièce sensiblement monobloc et, enfin, à surmouler sous pression ladite pièce résinée, ainsi que la portion proximale du câble (5), avec un matériau (7) thermoplastique compatible avec la résine (6) utilisée, pour obtenir un appareil ou instrument (1, 1') présentant la forme souhaitée,
procédé **caractérisé en ce qu'**il consiste, après le prémontage et avant le résinage, à mettre en place au moins une pièce de rétention (9) pour maintenir les composants actifs (2, 2') et/ou sous-ensembles (3) de tels composants, sur et/ou dans le corps support (4) après la phase de prémontage et durant la phase de résinage.

2. Procédé selon la revendication 1, **caractérisé en ce qu'**il consiste à regrouper certains des différents composants actifs (2, 2') en un ou plusieurs sous-ensemble(s) fonctionnel(s) (3) avant leur prémontage sur et/ou dans le corps support (4) et **en ce qu'**il consiste à disposer la pièce résinée monobloc dans le moule de surmoulage par injection de telle manière qu'au moins une face ou une portion de face (8) formant, le cas échéant, face de détection, n'est pas recouverte par le matériau (7) de surmoulage.

3. Procédé selon la revendication 2, **caractérisé en ce qu'**il consiste à délimiter latéralement la face ou portion de face (8) non recouverte par le matériau de surmoulage (7) par des cannelures ou des renfoncements similaires, destiné(e)s à former avec ledit matériau (7) des chicanes d'étanchéité.

4. Procédé selon l'une quelconque des revendications 1 à 3, **caractérisé en ce qu'**il consiste à solidariser la pièce de rétention (9) avec le corps support (4) par l'intermédiaire d'un engagement par encliquetage au niveau de portions de venue en prise (4') formées sur ledit corps support (4), la pièce de rétention (9) présentant une forme générale en U.

5. Procédé selon l'une quelconque des revendications 1 à 4, **caractérisé en ce que** la pièce de rétention (9) recouvre au moins un voyant lumineux (2') et constitue un guide de lumière pour ce ou ces derniers, au moins une partie (9') des faces externes de ladite pièce (9) n'étant pas recouverte par le matériau (7) de surmoulage.

6. Procédé selon l'une quelconque des revendications 1 à 5, **caractérisé en ce que** le corps support (4) constitue l'ossature structurante du dispositif (1, 1'), définit au moins certaines des conformations externes du dispositif (1, 1') fini et présente un contenant (4") en forme de boîtier ouvert pouvant recevoir au moins un sous ensemble fonctionnel (3) sous forme de carte à circuits imprimés, ainsi que l'extrémité du câble (5), la bride de maintien (9) fermant au moins partiellement l'ouverture d'introduction dudit boîtier (4") après encliquetage et le résinage n'affectant sensiblement que l'intérieur dudit boîtier (4").

7. Procédé selon l'une quelconque des revendications 1 à 6, **caractérisé en ce qu'**il consiste, dans le cas d'un capteur ou détecteur inductif, à réaliser, préalablement au prémontage des composants actifs (2, 2') sur et/ou dans le corps support (4), le composant détecteur (2) comprenant la bobine de détection (10) sous forme de module ou de sous-ensemble résiné, ce par implantation de ladite bobine (10) et de bornes (10') de connexion externe sur ou dans une pièce support (10"), et résinage consécutif de l'ensemble monté ainsi formé.

8. Appareil ou instrument de mesure, obtenu au moyen du procédé selon l'une quelconque des revendications 1 à 6 et principalement constitué d'un noyau résiné monobloc, renfermant notamment les différents composants actifs (2, 2') montés sur/dans un corps support (4), et d'une enveloppe ou coque externe (7) surmoulée, **caractérisé en ce qu'**il comprend également une pièce de rétention maintenant les composants actifs (2, 2') sur/dans le corps support (4).

9. Capteur ou détecteur, obtenu au moyen du procédé selon l'une quelconque des revendications 1 à 7 et principalement constitué d'un noyau résiné monobloc, renfermant notamment les différents composants actifs (2, 2') montés sur/dans un corps support (4), et d'une enveloppe ou coque externe (7) surmoulée, **caractérisé en ce qu'**il comprend également une pièce de rétention maintenant les composants actifs (2, 2') sur/dans le corps support (4).

## Claims

1. Method for manufacturing a device such as a measuring or detecting instrument or apparatus, in particular a sensor or a detector, consisting of mounting the different active components (2, 2') of the device (1, 1') on an/or in a support body (4), then coating with resin at least partly the resulting mounted assembly, including its zones for joining with a connecting and/or feed cable (5), to form a substantially monoblock member, and then overmoulding under pressure the said resin-coated member including the proximal portion of the cable (5), using a thermoplastic material (7) compatible with the resin (6) used to obtain an apparatus or instrument (1, 1') with the desired shape, the method being **characterised in that** it consists after the mounting and before the resin coating of putting in place at least one retention member (9) for holding the active components (2, 2') and/or subassemblies (3) of such components on and/or in the support body (4) after the mounting phase and during the resin-coating phase.

2. Method according to claim 1, **characterised in that** it consists of regrouping some of the various active components (2, 2') into one or more functional sub-assemblies (3) prior to their mounting on and/or in the support body (4), and **in that** it consists of placing the monoblock resin-coated member into the mould for injection overmoulding in such a way that at least one face or portion of a face (8) forming, possibly the detection face, is not covered by the overmoulding material (7).

3. Method according to claim 2, **characterised in that** it consists of delimiting laterally the face or portion of face (8) not covered by the overmoulding material (7) with similar channels or reinforcements, intended to form with said material (7) sealing plates.

4. Method according to any one of claims 1 to 3, **characterised in that** it consists of joining the retention member (9) to the support body (4) by means of catching engagement with connecting portions (4') formed on said support body (4), the retention member (9) generally having a U shape.

5. Method according to any one of claims 1 to 4, **characterised in that** the retention member (9) covers at least one luminous lamp (2') and forms a light guide for the latter, at least part (9') of the external faces of the said member (9) not being covered by the overmoulding material (7).

6. Method according to any one of claims 1 to 5, **characterised in that** the support body (4) forms the structural framework of the device (1, 1'), defines at least some of the external configurations of the finished device (1, 1') and consists of a container (4") in the form of an open housing able to receive at least one functional subassembly (3) in the form of a printed circuit board including the end of the cable (5), the retaining clamp (9) closing at least partially the introduction opening of said housing (4") after the catching engagement and the resin-coating only affecting the interior of said housing (4").

7. Method according to any one of claims 1 to 6, **characterised in that** it consists, in the case of an inductive sensor or detector, of forming, prior to the mounting of the active components (2, 2') on and/or in the support body (4), the detection component (2) comprising the detection coil (10) in the form of a resin-coated module or subassembly, by implantation of said coil (10) and external connection terminals (10') on or in a support member (10") and the subsequent resin-coating of the thus formed mounted assembly.

8. Measuring apparatus or instrument obtained by means of the method according to any one of claims 1 to 6 and mainly consisting of a monoblock resin-coated core, containing in particular the various active components (2, 2') mounted on/in a support body (4), and an overmoulded casing or outer shell (7), **characterised in that** it also comprises a retention member supporting the active components (2, 2') on/in the support body (4).

9. Sensor or detector, obtained by means of the method according to any one of claims 1 to 7 and mainly comprising a monoblock resin-coated core, containing in particular the various active components (2, 2') mounted on /in a support body (4), and an overmoulded casing or outer shell (7), **characterised in that** it also comprises a retention member holding the active components (2, 2') on/in the support body (4).

## Patentansprüche

1. Verfahren zur Herstellung einer Vorrichtung von der Art Meß- oder Erfassungsinstrument oder -gerät, insbesondere eines Sensors oder eines Fühlers, das darin besteht, die verschiedenen aktiven Bauteile (2, 2') der Vorrichtung (1, 1') an und/oder in einem Tragkörper (4) vorzumontieren, anschließend die hieraus hervorgehende vormontierte Einheit sowie ihre Bereiche zur Verbindung mit einem Verbindungs- und/oder Versorgungskabel (5) wenigstens teilweise mit Harz zu überziehen, um ein im wesentlichen einstückiges Teil zu bilden, und schließlich das harzbeschichtete Teil sowie den proximalen Abschnitt des Kabels (5) unter Druck mit einem mit dem verwendeten Harz (6) kompatiblen thermoplastischen Werkstoff (7) zu umgießen, um ein die gewünschte Form aufweisendes Gerät oder Instrument (1, 1') zu erhalten,
Verfahren **dadurch gekennzeichnet, daß** es darin besteht, nach der Vormontage und vor der Harzbeschichtung wenigstens ein Halteteil (9) anzubringen, um die aktiven Bauteile (2, 2') und/oder Untergruppen (3) derartiger Bauteile nach der Vormontagephase und während der Harzbeschichtungsphase an und/oder in dem Tragkörper (4) zu halten.

2. Verfahren nach Anspruch 1, **dadurch gekennzeichnet, daß** es darin besteht, einige der verschiedenen aktiven Bauteile (2, 2') vor ihrer Vormontage an und/oder in dem Tragkörper (4) in eine oder mehrere Funktionsuntergruppe(n) (3) zu gruppieren, und daß es darin besteht, das harzbeschichtete, einstückige Teil in der Umspritzungsform derart anzuordnen, daß wenigstens eine Seite oder ein Seitenabschnitt (8), die bzw. der gegebenenfalls eine Erfassungsseite bildet, nicht mit dem Vergußwerkstoff (7) überzogen wird.

3. Verfahren nach Anspruch 2, **dadurch gekennzeichnet, daß** es darin besteht, die bzw. den nicht mit dem Vergußwerkstoff (7) überzogene(n) Seite oder Seitenabschnitt (8) durch Auskehlungen oder ähnliche Vertiefungen seitlich zu begrenzen, die dazu bestimmt sind, mit dem vorgenannten Werkstoff (7) Dichtungshindernisse zu bilden.

4. Verfahren nach einem der Ansprüche 1 bis 3, **dadurch gekennzeichnet, daß** es darin besteht, das Halteteil (9) mittels eines Rasteingriffes im Bereich von an dem Tragkörper (4) gebildeten Eingreifabschnitten (4') fest mit dem Tragkörper (4) zu verbinden, wobei das Halteteil (9) insgesamt im Wesentlichen in Form eines U ausgebildet ist.

5. Verfahren nach einem der Ansprüche 1 bis 4, **dadurch gekennzeichnet, daß** das Halteteil (9) wenigstens eine Kontrolleuchte (2') bedeckt und einen Lichtleiter für letztere bildet, wobei wenigstens ein Teil (9') der Außenseiten des Teils (9) nicht mit dem Vergußwerkstoff (7) überzogen ist.

6. Verfahren nach einem der Ansprüche 1 bis 5, **dadurch gekennzeichnet, daß** der Tragkörper (4) das strukturelle Gerüst der Vorrichtung (1, 1') bildet, wenigstens einige der Außenformen der fertigen Vorrichtung (1, 1') definiert und einen Behälter (4") mit der Form eines offenen Gehäuses aufweist, der wenigstens eine Funktionsuntergruppe (3) in Form einer Leiterplatte sowie das Ende des Kabels (5) aufnehmen kann, wobei der Halteflansch (9) die Einführöffnung des Gehäuses (4") nach dem Einrasten wenigstens teilweise verschließt und die Harzbeschichtung im wesentlichen nur den Innenraum des Gehäuses (4") betrifft.

7. Verfahren nach einem der Ansprüche 1 bis 6, **dadurch gekennzeichnet, daß** es im Falle eines induktiven Sensors oder Fühlers darin besteht, vor der Vormontage der aktiven Bauteile (2, 2') an und/oder in dem Tragkörper (4) das Fühlerbauteil (2), das die Erfassungsspule (10) in Form eines Moduls oder einer harzbeschichteten Untergruppe enthält, auszubilden, und zwar durch Anbringen der Spule (10) und von Außenverbindungsanschlüssen (10') an oder in einem Tragteil (10") und anschließende Harzbeschichtung der so gebildeten montierten Einheit.

8. Meßgerät oder -instrument, das mittels des Verfahrens nach einem der Ansprüche 1 bis 6 erhalten wird und hauptsächlich aus einem einstückigen, harzbeschichteten Kern, welcher insbesondere die verschiedenen, an/in einem Tragkörper (4) angebrachten aktiven Bauteile (2, 2') enthält, und aus einer aufgegossenen Außenhülle oder -schale (7) besteht, **dadurch gekennzeichnet, daß** es auch ein Halteteil aufweist, das die aktiven Bauteile (2, 2') an/in dem Tragkörper (4) hält.

9. Sensor oder Fühler, der mittels des Verfahrens nach einem der Ansprüche 1 bis 7 erhalten wird und hauptsächlich aus einem einstückigen, harzbeschichteten Kern, welcher insbesondere die verschiedenen, an/in einem Tragkörper (4) angebrachten aktiven Bauteile (2, 2') enthält, und aus einer aufgegossenen Außenhülle oder -schale (7) besteht, **dadurch gekennzeichnet, daß** er auch ein Halteteil aufweist, das die aktiven Bauteile (2, 2') an/in dem Tragkörper (4) hält.
